# EUROPEAN PATENT SPECIFICATION

(11) **EP 3 037 698 B1**
(45) Date of publication and mention of the grant of the patent: **14.03.2018**
(21) Application number: 15200188.9
(22) Date of filing: 15.12.2015
(51) Int. Cl.: F16K 11/074, F16K 3/08

(54) **CHANNEL SWITCH VALVE**
KANALSCHALTERVENTIL
SOUPAPE DE COMMUTATION DE CANAL

(30) Priority: 26.12.2014 JP 2014265979
(43) Date of publication of application: 29.06.2016
(73) Proprietor: Fujikoki Corporation, Tokyo 158-0082 (JP)
(72) Inventor: HARA, Seiichi, Tokyo, 158-0082 (JP); MOCHIZUKI, Kenichi, Tokyo, 158-0082 (JP)
(74) Representative: Plougmann Vingtoft a/s

(56) References cited:
- EP-A1- 2 354 607
- DE-A1-102006 053 307
- DE-A1-102008 054 750
- US-A- 5 169 117

## Description

### Technical Field

The present invention relates to a channel switch valve, such as a three-way valve or a four-way valve having at least one inflow port and two outflow ports, and particularly relates to a channel switch valve that is suitably used for switching of a channel in hot-water supply equipment.

### Background Art

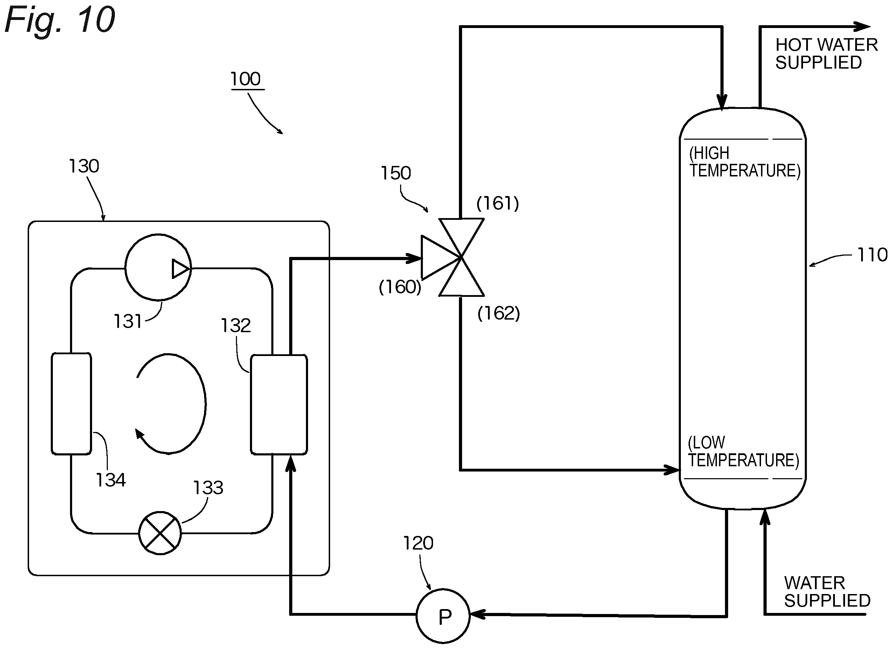

Fig. 10 illustrates a major part of conventional hot-water supply equipment as one example, including a three-way valve that is one of channel switch valves having one inflow port and two outflow ports (see Patent Document 1 also). Hot-water supply equipment 100 in the drawing basically includes: a hot-water tank 110 to which water is supplied from the lower part and of which hot water is supplied from the upper part; a heat pump type water heat source 130 including a compressor 131, a water heat exchanger (water heater) 132, an expansion valve 133, and an air heat exchanger 134 or the like; a boiling-up pump 120 to circulate water between the hot-water tank 110 and the heat source 130, and a three-way valve 150 as a channel switch valve having one inflow port 160 and two outflow ports 161 and 162.

The three-way valve 150 is configured as an electronically-controlled motor valve, for example, in which the channel is switched in accordance with a temperature or the like of water that is detected by a temperature sensor disposed at a necessary part, and the three-way valve 150 can have a first circulating state to let water flow from the inflow port 160 to the first outflow port 161 and a second circulating state to let water flow from the inflow port 160 to the second outflow port 162 in a selectable manner. Typically when water from the heat source 130 is at high temperatures, it has the first circulating state, so that the hot water at high temperatures is returned to the upper part of the tank 110, and when water from the heat source 130 is at low temperatures, it has the second circulating state, so that the water at low temperatures is returned to the lower part of the tank 110, which is sent to the heat source 130 via the boiling-up pump 120 again.

### Citation List

### Patent Literature

Patent Literature 1: JP 2004-257583 A

### Summary of Invention

### Technical Problem

In such a conventional channel switch valve including a three-way valve used for hot-water supply equipment or the like, in order to prevent the fluid from leaking to the second outflow port in the first circulating state (inflow port → first outflow port) or in order to prevent the fluid from leaking to the first outflow port in the second circulating state (inflow port → second outflow port), a sealing member, such as an O ring, is disposed at least between the first outflow port and the second outflow port. Provision of such a sealing member including an O ring, however, requires preparing an annular fixing groove, for example, at a valve element, and this leads to a tendency to increase the component cost, the machining and assembly cost and accordingly the product cost.

Further, in the case of a channel switch valve used for hot-water supply equipment or the like, fluid pressure in a pipe connected to an outflow port may abruptly rise due to freezing, for example, and so high pressure (back pressure) in the direction opposite of the normal direction may be applied to the channel switch valve, and the channel switch valve, the pipe or the like may break due to such back pressure.

To avoid this, a channel bypassing the channel switch valve may be provided, for example, and a relief valve may be inserted in the channel so as to open at predetermined pressure or more. Such a method has a problem that the number of components including a pipe and a joint is increased and a lot of labor and time is required for the piping and connection, and so causes an increase in cost of the equipment.

In view of these problems, the present invention aims to provide a channel switch valve that can eliminate a sealing member, such as an O ring, to prevent the leakage between a plurality of outflow ports, and does not require strict dimensional control and precise machining and forming technology, and can prevent leakage between outflow ports reliably, and can have a relief function to release back pressure effectively, and can lower the machining and assembly cost and the production cost. Furthermore, a channel switch valve according to the preamble of claim 1 is known from EP 2 354 607 A1.

### Solution to Problem

To fulfill the aim, a channel switch valve according to the present invention comprises the features of claim 1.

In a preferable embodiment, the valve shaft with the valve element is pushed upward by pressure of fluid flowing into the inflow port, whereby an upper face of the valve element is pushed against the valve seat.

Preferably the valve element is configured so that the upper face at a part other than the passage opening can be in intimate contact with the valve seat for watertight sealing between the outflow ports.

In this case, in a preferable embodiment, the part of the upper face of the valve element other than the passage opening is a flat and smooth face.

Preferably the valve body includes separate pieces made up of a body part having a cylindrical part provided with the plurality of outflow ports on the periphery, and an inflow port part having the inflow port, an upper part of the inflow port part being inserted and fixed to a lower part of the cylindrical part of the body part.

In this case, in a preferable embodiment, the space for valve element is defined with the lower part of the cylindrical part and the valve seat of the body part, and an upper end of the inflow port part.

Preferably the upper end of the inflow port part serves as a stopper to stop the valve element from descending from a lower face of the valve seat by a predetermined distance or more.

### Advantageous Effects of Invention

The channel switch valve according to the present invention is configured to push the upper face of the valve element against the valve seat using fluid pressure in the valve body for sealing between the outflow ports, and so no sealing member, such as an O ring, is required for sealing between the outflow ports, and then the machining and assembly cost and the production cost can be lowered.

Further since the valve shaft with the valve element can have a relatively simple structure, and is configured so that the upper face of the valve element is pushed upward by the fluid pressure in the valve body for intimate contact with the valve seat, it does not require strict dimensional control and precise machining and forming technology, and a required sealing property can be easily achieved reliably between the outflow ports. This can also lead to an advantage of a low machining and assembly cost and production cost.

Further, if the pressure on the side of any outflow port increases to predetermined pressure or more, back pressure will be applied to the valve element so that the valve element is pushed downward to create a gap between the valve element and the valve seats, and accordingly the back pressure on the outflow port side is allowed to flow to the inflow port side. In this way, the channel switch valve of the present invention can have a relief function to let back pressure out effectively, and so can avoid a failure of the channel switch valve or pipes due to back pressure effectively. Moreover, there is no need to provide a relief valve separately in the channel, and so an increase in cost of the equipment can be suppressed.

### Brief Description of Drawings

Fig. 1 is a perspective view showing the appearance of a channel switch valve that is one embodiment of the present invention.
Fig. 2 is a partially cutaway cross-sectional view of the above embodiment showing a first circulating state.
Fig. 3 is a half cross-sectional perspective view of the above embodiment showing the first circulating state.
Fig. 4 is a partially cutaway cross-sectional view of the above embodiment showing a second circulating state.
Fig. 5 is a half cross-sectional perspective view of the above embodiment showing the second circulating state.
Fig. 6(A) is a U-U cross sectional view of Fig. 2, and Fig. 6(B) is a V-V cross sectional view of Fig. 4.
Fig. 7 is a partially cutaway cross-sectional view to explain the state where back pressure occurs in the above embodiment.
Fig. 8 is a perspective view showing a valve shaft with a valve element in the above embodiment.
Fig. 9 is a perspective view showing a body part in the above embodiment.
Fig. 10 schematically shows the structure of a major part of conventional hot-water supply equipment as one example, including a channel switch valve having one inflow port and two outflow ports.

### Description of Embodiments

Referring to the drawings, the following describes one embodiment of the present invention.

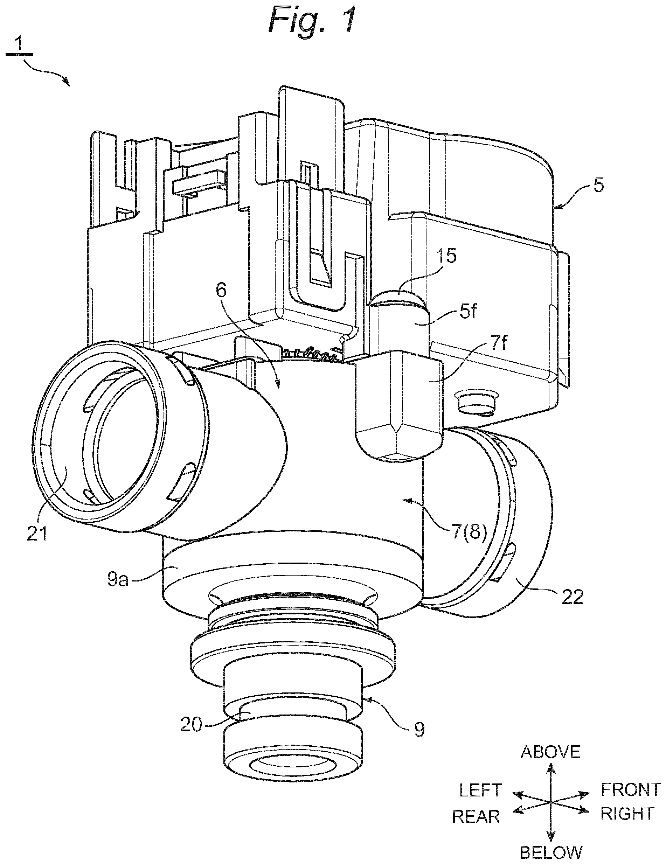

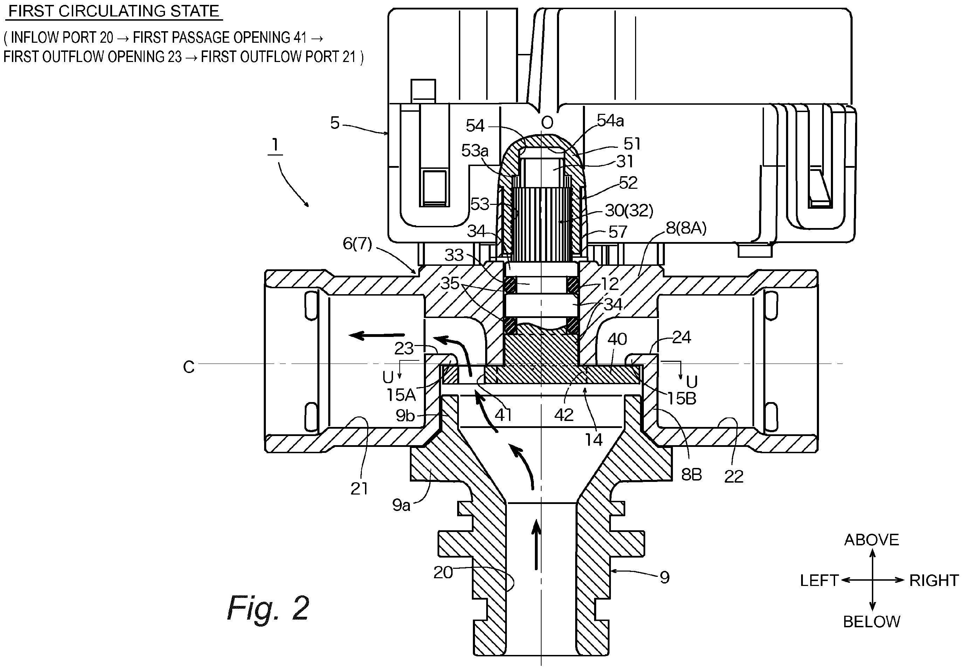

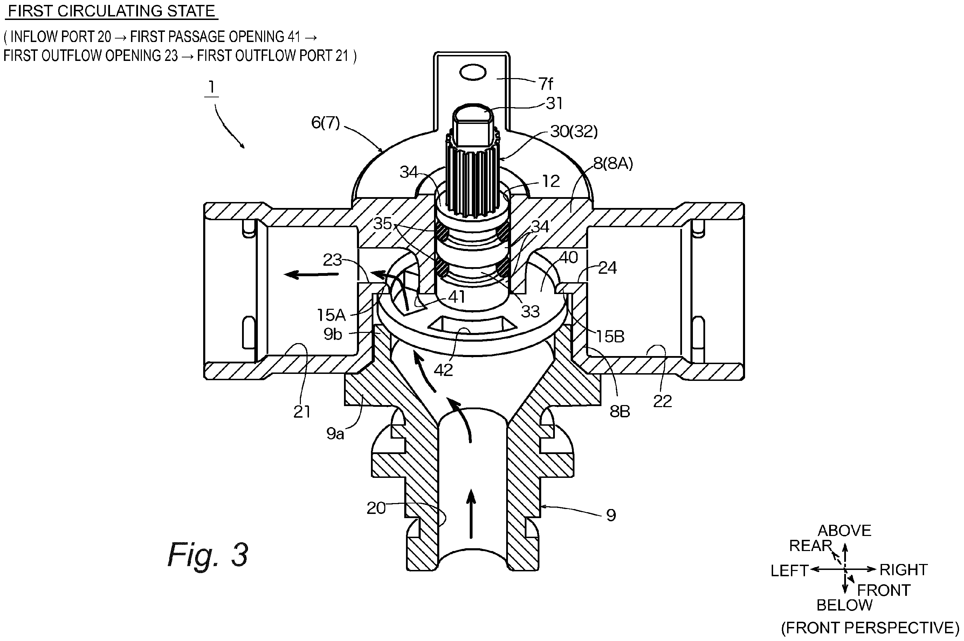

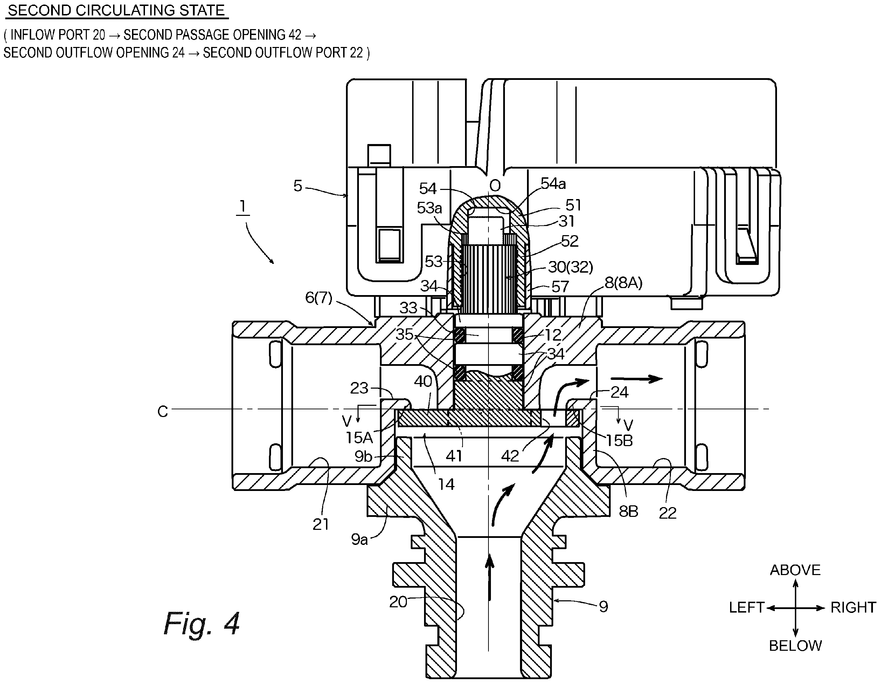

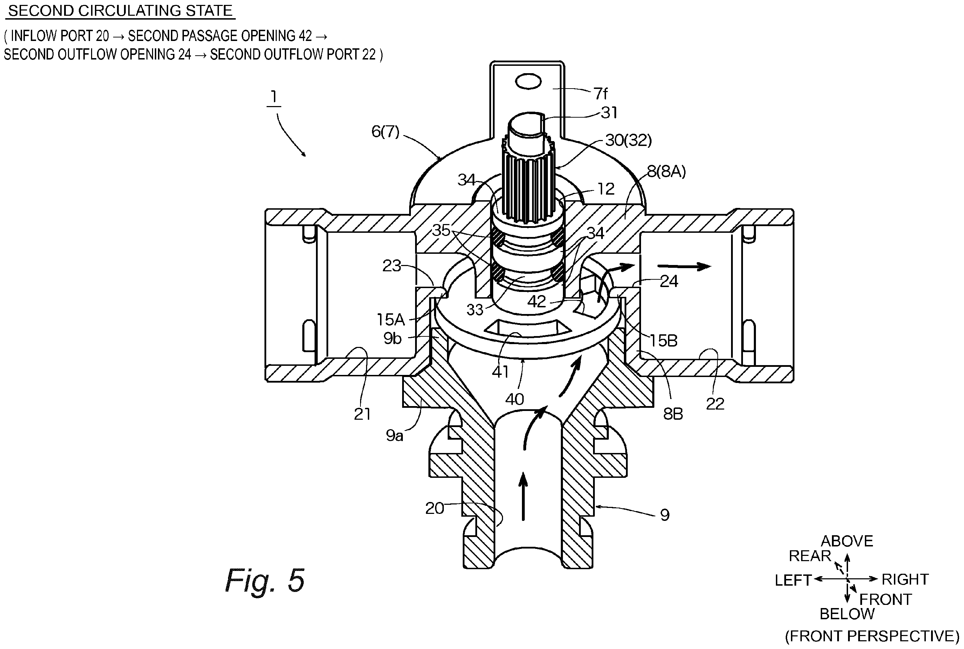

Fig. 1 is a perspective view of the appearance of a channel switch valve that is one embodiment according to the present invention, Fig. 2 and Fig. 3 are a partially cutaway cross-sectional view and a half cross-sectional perspective view of the embodiment showing a first circulating state, and Fig. 4 and Fig. 5 are a partially cutaway cross-sectional view and a half cross-sectional perspective view of the embodiment showing a second circulating state. In Fig. 1 to Fig. 5, illustration or hatching are omitted for parts (e.g., interior of a motor 5) that are not always required to understand the present invention. In the drawings, a gap between the parts or a distance between the parts may be expanded for illustration for easy understanding of the present invention or for convenience to prepare the drawings.

In the present specification, descriptions for the position or the direction, such as above and below (upper and lower, vertical), right and left (horizontal) and front and rear, are added for convenience in accordance with those of the drawings to avoid complicated explanations, which are not intended to indicate the position or the direction in the actual operation state.

A channel switch valve 1 in the embodiment illustrated is used for hot-water supply equipment as stated in Fig. 10 (corresponding to 150 in Fig. 10), and basically includes a valve shaft 30, a motor 5 as a driving source to rotary drive the valve shaft 30, and a valve body 6 above which the motor 5 is to be attached and fixed.

The valve body 6 is made of synthetic resin, and for a reason for convenience to form thereof, for example, it includes separate pieces including a body part 7 and an inflow port part 9.

As is well understood from Figs. 1 to 5 as well as Fig. 9, the body part 7 includes a base 8 made up of an upper short columnar part 8A and a lower cylindrical part 8B, and on the periphery (lateral parts on the right and left) of this base 8, a first outflow port (joint) 21 and a second outflow port (joint) 22 of a stepped cylindrical shape are opposed.

On the front and the rear of the upper part of the upper short columnar part 8A, attachment mounts 7f and 7f are provided, and when the motor 5 is to be attached and fixed to the body part 7, screwing parts 5f and 5f at the front and the rear of the lower part of the motor 5 are placed on the attachment mounts 7f and 7f, and then the motor 5 and the body part 7 are fastened and fixed with front and rear two screws 15.

The upper short columnar part 8A of the base 8 has a space 12 into which the valve shaft is to be inserted (valve shaft insertion space) so as to vertically penetrate through the center of the upper short columnar part 8A, and has a first outflow opening 23 of an inverted L-letter shape and a second outflow opening 24 of an inverted L-letter shape that are horizontally symmetrical to have an angular space of 180° therebetween, where the first outflow opening 23 has a peripheral opening that is open to the first outflow port 21 and a lower opening, and the second outflow opening 24 has a peripheral opening that is open to the second outflow port 22 and a lower opening.

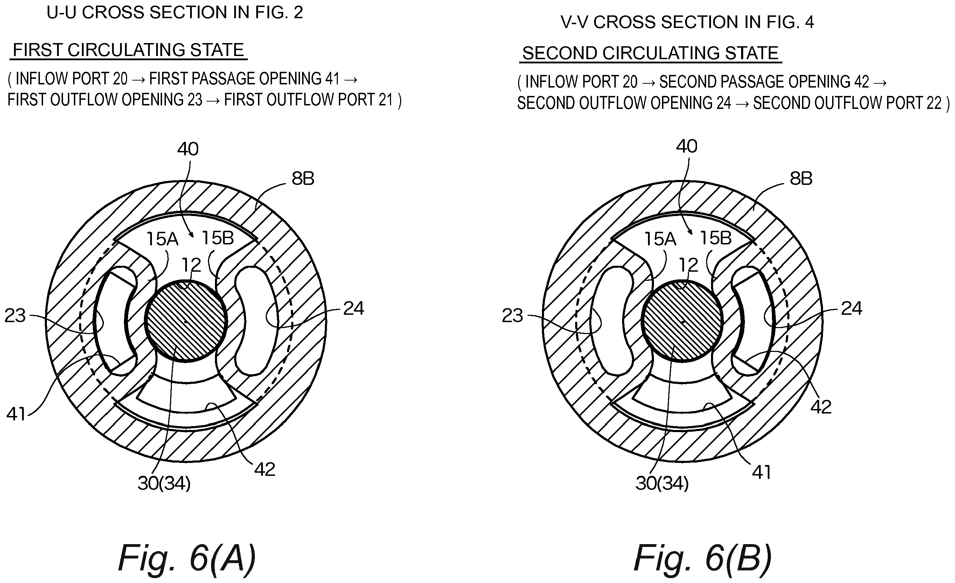

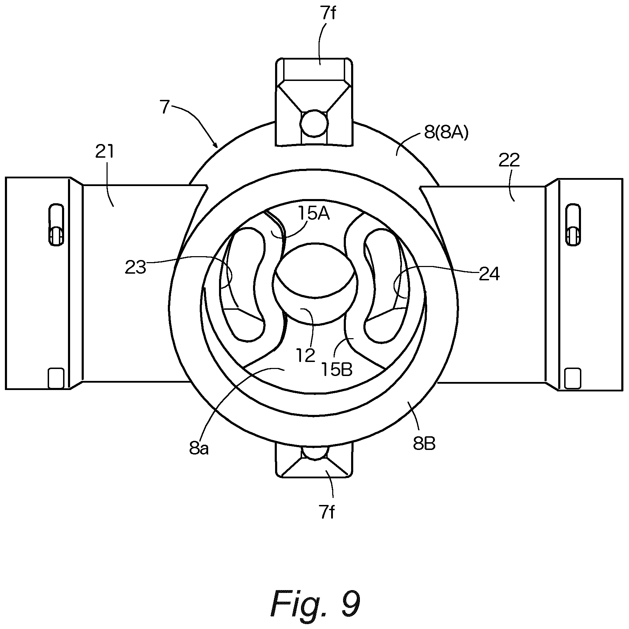

More specifically, the lower openings of the first outflow opening 23 and the second outflow opening 24 have a curved long-groove shape or a fan shape having the center angle of 100° or more with semicircles at their both ends, and the lower ends of them protrude below from the lower end face 8a (see Fig. 9) of the upper short columnar part 8A. These lower ends of the first outflow opening 23 and the second outflow opening 24 define valve seats 15A and 15B, respectively, against which the upper face of a valve element 40 described later is pushed to be in intimate contact. In other words, the valve seats 15A and 15B are frame-like protrusions having a predetermined width, which have the same outer shape of the edges defining the first outflow opening 23 and the second outflow opening 24, respectively, and have a lower face (valve seat face) that is a flat and smooth face and is orthogonal to the center line (rotating axial line of the valve shaft 30) O of the valve shaft insertion space 12. The lower openings of the first outflow opening 23 and the second outflow opening 24 have a width that is slightly larger than the width of passage openings 41 and 42 formed at the valve element 40 described later, and have a length (center angle) that is longer than the length (center angle) of the passage openings 41 and 42 by the lengths of their semicircular parts on both ends (see Fig. 6 also).

Meanwhile the inflow port part 9 has an inner face defining a funnel-shaped insertion hole that serves as an inflow port 20, and on the periphery it has a collar 9a, on which the lower cylindrical part 8B of the base 8 in the body part 7 is to be placed, and a protruding and inserting part 9b that protrudes above from the collar 9a and is to be inserted into the lower part of the lower cylindrical part 8B. The collar 9a and the lower cylindrical part 8B are firmly fixed by ultrasound welding or the like.

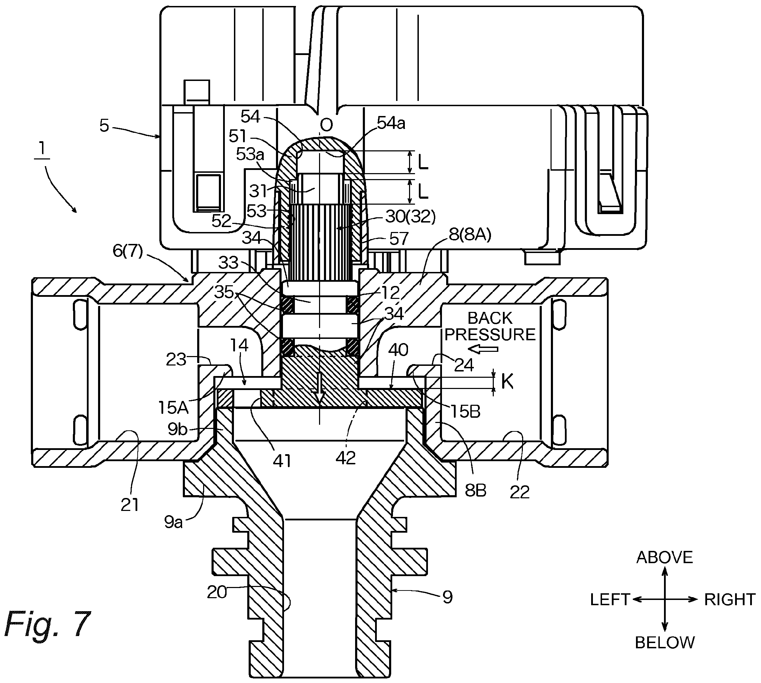

Note that the lower part of the lower cylindrical part 8B, the lower face 8a of the base 8, and the protruding and inserting part 9b (upper end face thereof) of the inflow port part 9 define a space for valve element 14 to house the valve element 40 described later in a swingable manner. The protruding and inserting part 9b of the inflow port part 9 serves as a stopper as well that stops the valve element 40 from descending from the lower face (valve seat face) of the valve seats 15A and 15B by a predetermined distance or more (see Fig. 7).

In the valve body 6, the space for valve element 14 and the inflow port 20 are disposed on the center line O of the valve shaft insertion space 12, and the first outflow port 21 and the second outflow port 22 are disposed on the common center line C that is orthogonal to the center line O.

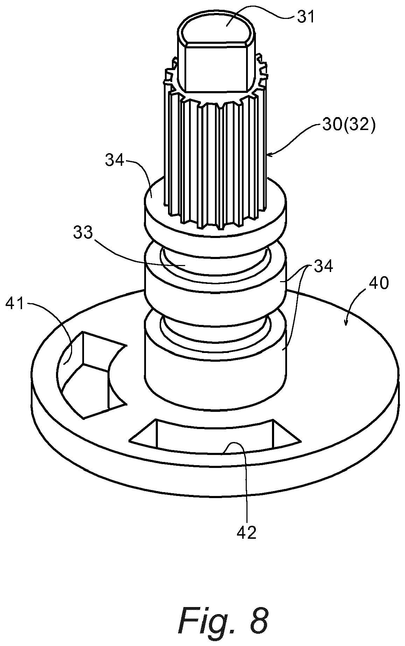

As is well understood from Figs. 1 to 5 as well as Fig. 8, the valve shaft 30 includes a D-cut protrusion 31 for positioning in the circumferential direction, and an involute serration shaft 32 to transmit the rotary driving force of the motor 5 via a reducing gear mechanism. Below the involute serration shaft 32, fitting grooves defined by three collars 34 are provided, into which O rings 35 and 35 are fitted (a part of the valve shaft 30, to which the O rings 35 and 35 are fitted, is called an O ring fitting part 33), and at a lowermost part thereof, the valve element 40 that is thick and has a disk shape are integrally provided (the valve shaft 30 and the valve element 40 are configured as a single piece). Such a valve shaft 30 with the valve element 40 is slidable within a predetermined range in the axial direction (vertical direction) in the valve shaft insertion space 12.

Specifically a support 57 is provided in the motor 5 so as to rotatably support an output gear 51 of the reducing gear mechanism. The output gear 51 has a boss 52, at which a serration fitting hole 53 is provided so as to receive the involute serration shaft 32 that is inserted and fitted in a slidable manner in the axial direction, and above the serration fitting hole 53, a D-letter shaped fitting hole 54 is provided in a linked manner, to which the D-cut protrusion 31 is fitted. In this case, in order to allow for a maximum ascending position of the valve element 40 in which the valve element 40 is pushed against the valve seats 15A and 15B as illustrated in Figs. 1 to 5 and a maximum descending position of the valve element 40 (descending by distance K from the maximum ascending position) in which the valve element 40 comes into contact with the upper face of the protruding and inserting part 9b of the inflow port part 9 as illustrated in Fig. 7, the valve shaft 30 with the valve element 40 has a space of a distance L that is longer than the distance K between the upper end of the involute serration shaft 32 and an upper step face 53a of the serration fitting hole 53 and between the upper end of the D-cut protrusion 31 and an upper face 54a of the D-letter shaped fitting hole 54 in the state where the valve shaft 30 with the valve element 40 is at the maximum descending position (Fig. 7).

The valve element 40 has two passage openings 41 and 42 (first passage opening 41 and second passage opening 42) with the angular interval of 90° so as to let the inflow port 20 and the first outflow port 21 open or let the inflow port 20 and the second outflow port 22 open in a selectable manner. Each passage opening 41, 42 has a fan shape having the center angle from 70° to 80°, and the width and the length (central angle) are smaller than those of the lower openings of the first outflow opening 23 and the second outflow opening 24 as stated above.

The upper face of the valve element 40 at a part other than the passage opening 41, 42 is a flat and smooth face so as to achieve an intimate contact with the lower face (valve seat face) of the valve seats 15A and 15B for watertight sealing between the outflow ports 21 and 22.

For the position of the valve element 40 relative to the valve seats 15A and 15B in the rotation direction, the state where the first passage opening 41 is located directly below the valve seat 15A (the first outflow opening 23) is a reference state (first circulating state) as illustrated in Fig. 2, Fig. 3 and Fig. 6(A), and the state where the valve element is rotated by 90° counterclockwise from the first circulating state, i.e., where the second passage opening 42 is located directly below the valve seat 15B (second outflow opening 24) is a second circulating state as illustrated in Fig. 4, Fig. 5 and Fig. 6(B).

When the thus configured channel switch valve 1 of the present embodiment is incorporated in the above-described hot-water supply equipment illustrated in Fig. 10 as the three-way valve 150, the valve shaft 30 with the valve element 40 is pushed upward by difference pressure between the pressure of fluid (water) in the valve body 6 (pressure acting on a part of the valve shaft 30 below the O ring fitting part 33) and atmospheric pressure (pressure acting on a part of the valve shaft 30 above the O ring fitting part 33), and pressure of the fluid (water) flowing into the inflow port 20 and flowing to the first outflow port 21 or the second outflow port 22, so that the upper face of the valve element 40 is pushed against the valve seats 15A and 15B and the valve element is rotatable while pushing the upper face against the valve seats 15A and 15B.

In this case, the valve shaft 30 with the valve element 40 is pushed upward so that the upper face of the valve element 40 is pushed against the valve seats 15A and 15B, whereby the outflow ports 21 and 22 are sealed watertight, and the valve shaft 30 is rotated in the state the valve element 40 is pushed thereto. Thereby, the valve can have the first circulating state where the fluid flows from the inflow port 20 to the first outflow port 21 via the first passage opening 41 and the second circulating state where the fluid flows from the inflow port 20 to the second outflow port 22 via the second passage opening 42 in a selectable manner.

That is, as illustrated in Fig. 2 and Fig. 3, when the first passage opening 41 is located directly below the valve seat 15A that is the lower end of the first outflow opening 23, it has the first circulating state in which fluid flows from the inflow port 20 → the first passage opening 41 → the first outflow opening 23 → the first outflow port 21.

When the valve element 40 is rotated by about 90° counterclockwise from the first circulating state as stated above, then as illustrated in Fig. 4 and Fig. 5, the second passage opening 42 comes directly below the valve seat 15B that is the lower end of the second outflow opening 24, and so in this state, it has the second circulating state in which fluid flows from the inflow port 20 → the second passage opening 42 → the second outflow opening 24 → the second outflow port 22.

In this way, the channel switch valve 1 of the present embodiment is configured to push the valve shaft 30 with the valve element 40 upward using the fluid pressure in the valve body 6 and to push the upper face of the valve element 40 against the valve seats 15A and 15B for sealing between the first outflow port 21 and the second outflow port 22, and so no sealing member, such as an O ring, is required for sealing between the first outflow port and the second outflow port, and then the machining and assembly cost and the production cost can be lowered.

Further since the valve shaft 30 with the valve element 40 has a relatively simple structure, and is configured so that the upper face of the valve element 40 is pushed upward by the fluid pressure in the valve body 6 for intimate contact with the valve seats 15A and 15B, it does not require strict dimensional control and precise machining and forming technology, and a required sealing property can be easily achieved reliably between the first outflow port 21 and the second outflow port 22.

As illustrated in Fig. 7, when the valve has the first circulating state (inflow port 20 → first outflow port 21), for example, if the pressure on the second outflow port 22 side increases to predetermined pressure or more, back pressure will be applied to the valve element 40 (the upper face thereof) so that the valve shaft 30 with the valve element 40 is slightly inclined or is pushed downward to create a small gap between the lower face (valve seat face) of the valve seats 15A and 15B and the upper face of the valve element 40, and accordingly the pressure on the second outflow port 22 side is allowed to flow to the inflow port 20 side. At this time, the valve element 40 descends so as to come into contact with the upper end of the protruding and inserting part 9b of the inflow port part 9 at the maximum, and further descending is stopped there (the protruding and inserting part 9b serves as a stopper to stop the descending of the valve element 40 by a predetermined distance or more).

In this way, the channel switch valve 1 of the present embodiment can have a relief function to let back pressure out effectively, and so can avoid a failure of the channel switch valve 1 or pipes due to back pressure caused by freezing or the like effectively. Moreover, there is no need to provide a relief valve separately in the channel, and so an increase in cost of the equipment can be suppressed.

The above embodiment exemplifies a three-way valve having two outflow ports as the channel switch valve, which is not a limiting example, and the valve may be a four-way valve or a five-way valve having three or four outflow ports. The structure of the valve element also is not limited to that in the above-described embodiment, and various forms can be used. Specifically, first through four outflow ports may be provided on the same plane with the intervals of 90°, and one passage opening is formed on the valve element, whereby every time the valve element is rotated by 90°, 180°, and 270°, the inflow port and each outflow port can be open in a selectable manner.

In the above embodiment, the valve shaft 30 and the valve element 40 are prepared as a single piece, and they naturally may be prepared as separate pieces and then assembled integrally.

### Reference Signs List

- 1: Channel switch valve
- 5: Motor
- 6: Valve body
- 7: Body part
- 8: Base
- 9: Inflow port part
- 12: Valve shaft insertion space
- 14: Space for valve element
- 15A, 15B: Valve seat
- 20: Inflow port
- 21: First outflow port
- 22: Second outflow port
- 23: First outflow opening
- 24: Second outflow opening
- 30: Valve shaft
- 40: Valve element
- 41, 42: Passage opening

## Claims

1. A channel switch valve (1), comprising: a valve shaft (30), a driving source (5) to rotary drive the valve shaft, and a valve body (6) including an inflow port (20), a plurality of outflow ports (21, 22), a valve shaft insertion space (12), into which the valve shaft is fitted and inserted rotatably, and a valve seat (15A, 15B) disposed at lower periphery of the valve shaft insertion space, wherein
outflow openings (23, 24) each serving as a starting end of the corresponding one of the outflow ports are disposed at the valve seat,
a thick and disk-shaped or a short cylindrical valve element (40) is disposed integrally with the valve shaft at a lower end of the valve shaft so as to protrude below from the valve seat, and the valve shaft with the valve element is slidable in the valve shaft insertion space in an axial direction of the valve shaft within a predetermined range,
a space (14) for valve element is disposed below the valve seat so as to house the valve element therein, the inflow port being disposed below the space for valve element,
the valve element has at least one passage opening (41, 42) to let the inflow port and each outflow port open in a selectable manner,
the valve shaft with the valve element is rotatable, whereby the valve at least has a first circulating state, in which fluid flows from the inflow port to one of the outflow ports via the passage opening, and a second circulating state, in which fluid flows from the inflow port to another outflow port via the passage opening in a selectable manner, **characterized in that** the valve shaft with the valve element is arranged such that, when pressure at any one of the outflow ports increases to predetermined pressure or more, the valve shaft with the valve element is pushed downward so as to create a gap between the valve seat and an upper face of the valve element, whereby pressurized fluid on the outflow port side is allowed to flow to the inflow port side.

2. The channel switch valve according to claim 1, wherein the valve shaft with the valve element is pushable upward by pressure of fluid flowing into the inflow port, whereby, in use, an upper face of the valve element is to be pushed against the valve seat.

3. The channel switch valve according to claim 1, wherein the valve element is configured so that the upper face at a part other than the passage opening can be in intimate contact with the valve seat for watertight sealing between the outflow ports.

4. The channel switch valve according to claim 3, wherein the part of the upper face of the valve element other than the passage opening is a flat and smooth face.

5. The channel switch valve according to claim 1, wherein the valve body includes separate pieces made up of a body part having a cylindrical part provided with the plurality of outflow ports on the periphery, and an inflow port part (9) having the inflow port, an upper part of the inflow port part being inserted and fixed to a lower part of the cylindrical part of the body part.

6. The channel switch valve according to claim 5, wherein the space for valve element is defined with the lower part of the cylindrical part and the valve seat of the body part, and an upper end of the inflow port part.

7. The channel switch valve according to claim 6, wherein the upper end of the inflow port part serves as a stopper to stop the valve element from descending from a lower face of the valve seat by a predetermined distance or more.

## Patentansprüche

1. Kanalumschaltventil (1), umfassend: eine Ventilwelle (30), eine Antriebsquelle (5), um die Ventilwelle drehend anzutreiben, und einen Ventilkörper (6), der einen Einlassanschluss (20), eine Vielzahl von Auslassanschlüssen (21, 22), einen Ventilwelleneinschubraum (12), in den die Ventilwelle drehbar eingesetzt und eingeschoben wird, und einen Ventilsitz (15A, 15B), der am unteren Umfang des Ventilwelleneinschubraums angeordnet ist, einschließt, wobei
Auslassöffnungen (23, 24), die jeweils als ein Anfangsende des entsprechenden der Auslassanschlüsse dienen, an dem Ventilsitz angeordnet sind,
ein dickes und scheibenförmiges oder ein kurzes zylindrisches Ventilelement (40) einstückig mit der Ventilwelle an einem unteren Ende der Ventilwelle so angeordnet ist, dass es unterhalb des Ventilsitzes hervorsteht, und die Ventilwelle mit dem Ventilelement in dem Ventilwelleneinschubraum in einer axialen Richtung der Ventilwelle innerhalb eines vorbestimmten Bereichs verschiebbar ist,
ein Raum (14) für das Ventilelement so unter dem Ventilsitz angeordnet ist, dass das Ventilelement darin untergebracht ist, wobei der Einlassanschluss unter dem Raum für das Ventilelement angeordnet ist,
das Ventilelement zumindest eine Durchgangsöffnung (41, 42) hat, um den Einlassanschluss und jeden Auslassanschluss in einer wählbaren Wiese offen zu lassen,
die Ventilwelle mit dem Ventilelement drehbar ist, wodurch das Ventil zumindest einen ersten Drehzustand, in dem Fluid von dem Einlassanschluss über die Durchgangsöffnung zu einem der Auslassanschlüsse strömt, und einen zweiten Drehzustand, in dem Fluid von dem Einlassanschluss über die Durchgangsöffnung in einer auswählbaren Weise zu einem anderen Auslassanschluss strömt, hat, **dadurch gekennzeichnet, dass** die Ventilwelle mit dem Ventilelement so angeordnet ist, dass, wenn Druck an einem der Auslassanschlüsse auf einen vorbestimmten Druck oder mehr steigt, die Ventilwelle mit dem Ventilelement nach unten gedrückt wird, um so eine Lücke zwischen dem Ventilsitz oder einer Oberseite des Ventilelements zu bilden, wodurch unter Druck stehendes Fluid an der Auslassanschlussseite zu der Einlassanschlussseite strömen kann.

2. Kanalumschaltventil nach Anspruch 1, wobei die Ventilwelle mit dem Ventilelement durch Druck von Fluid, das in den Einlassanschluss strömt, nach oben drückbar ist, wodurch in Verwendung eine Oberseite des Ventilelements gegen den Ventilsitz gedrückt wird.

3. Kanalumschaltventil nach Anspruch 1, wobei das Ventilelement so ausgelegt ist, dass die Oberseite an einem Teil, der nicht die Durchgangsöffnung ist, für eine wasserdichte Abdichtung zwischen den Auslassanschlüssen in engem Kontakt mit dem Ventilsitz sein kann.

4. Kanalumschaltventil nach Anspruch 3, wobei der Teil der Oberseite des Ventilelements, der nicht die Durchgangsöffnung ist, eine flache und glatte Oberfläche ist.

5. Kanalumschaltventil nach Anspruch 1, wobei den Ventilkörper separate Stücke umfasst, die aus einem Körperteil mit einem zylindrischen Teil, der mit der Vielzahl von Auslassanschlüssen an dem Umfang bereitgestellt ist, und einem Einlassanschlussteil (9) mit dem Einlassanschluss bestehen, wobei ein oberer Teil des Einlassanschlussteils in einem unteren Teil des zylindrischen Teils des Körperteils eingeschoben und befestigt ist.

6. Kanalumschaltventil nach Anspruch 5, wobei der Raum für das Ventilelement mit dem unteren Teil des zylindrischen Teils und dem Ventilsitz des Körperteils und einem oberen Ende des Einlassanschlussteils definiert ist.

7. Kanalumschaltventil nach Anspruch 6, wobei das obere Ende des Einlassanschlussteils als ein Stopper dient, um das Ventilelement dabei zu stoppen, von einer Unterseite des Ventilsitzes um einen vorbestimmten Abstand oder mehr abzusinken.

## Revendications

1. Soupape de commutation de canal (1), comprenant : un axe de soupape (30), une source d'entraînement (5) pour entraîner en rotation l'axe de soupape et un corps de soupape (6) comprenant un orifice d'entrée (20), une pluralité d'orifices de sortie (21, 22), un espace d'insertion d'axe de soupape (12) dans lequel l'axe de soupape est monté et inséré de façon à pouvoir tourner, et un siège de soupape (15A, 15B) disposé au niveau de la périphérie inférieure de l'espace d'insertion d'axe de soupape,
lesdites ouvertures de sortie (23, 24), chacune servant en tant qu'extrémité de départ de l'orifice de sortie correspondant parmi les orifices de sortie, étant disposées au niveau du siège de soupape,
un élément de soupape cylindrique court ou épais et en forme de disque (40) étant disposé intégralement avec l'axe de soupape au niveau d'une extrémité inférieure de l'axe de soupape de façon à faire saillie en-dessous depuis le siège de soupape, et ledit axe de soupape avec l'élément de soupape pouvant coulisser dans l'espace d'insertion d'axe de soupape selon une direction axiale de l'axe de soupape dans une plage prédéfinie,
un espace (14) pour élément de soupape étant disposé sous le siège de soupape de façon à loger l'élément de soupape en son sein, ledit orifice d'entrée étant disposé sous l'espace pour élément de soupape,
ledit élément de soupape possédant au moins une ouverture de passage (41, 42) pour laisser l'orifice d'entrée et chaque orifice de sortie ouverts de manière sélectionnable,
ledit axe de soupape avec l'élément de soupape pouvant tourner, moyennant quoi la soupape possède au moins un premier état de circulation dans lequel le fluide s'écoule depuis l'orifice d'entrée jusqu'à l'un des orifices de sortie par l'intermédiaire de l'ouverture de passage et un second état de circulation dans lequel le fluide s'écoule depuis l'orifice d'entrée jusqu'à un autre orifice de sortie par l'intermédiaire de l'ouverture de passage d'une manière sélectionnable, **caractérisée en ce que** l'axe de soupape avec l'élément de soupape soit agencé de sorte que, lorsque la pression au niveau de l'un quelconque des orifices de sortie augmente jusqu'à une pression prédéfinie ou plus, ledit axe de soupape avec l'élément de soupape soit poussé vers le bas de façon à créer un espace entre le siège de soupape et une face supérieure de l'élément de soupape, grâce à quoi le fluide sous pression du côté de l'orifice de sortie est autorisé à s'écouler vers le côté de l'orifice d'entrée.

2. Soupape de commutation de canal selon la revendication 1, ledit axe de soupape avec l'élément de soupape pouvant être poussé vers le haut par la pression du fluide s'écoulant dans l'orifice d'entrée, grâce à laquelle, lors de l'utilisation, une face supérieure de l'élément de soupape vient à être poussée contre le siège de soupape.

3. Soupape de commutation de canal selon la revendication 1, ledit élément de soupape étant configuré afin que la face supérieure au niveau d'une partie autre que l'ouverture de passage puisse être en contact étroit avec le siège de soupape pour le scellement étanche entre les orifices de sortie.

4. Soupape de commutation de canal selon la revendication 3, ladite partie de la face supérieure de l'élément de soupape autre que l'ouverture de passage étant une face plane et lisse.

5. Soupape de commutation de canal selon la revendication 1, ledit corps de soupape comprenant des pièces séparées constituées d'une partie corps possédant une partie cylindrique dotée de la pluralité d'orifices de sortie sur la périphérie et une partie orifice d'entrée (9) possédant l'orifice d'entrée, une partie supérieure de la partie orifice d'entrée étant insérée et fixée à une partie inférieure de la partie cylindrique de la partie corps.

6. Soupape de commutation de canal selon la revendication 5, ledit espace pour élément de soupape étant défini avec la partie inférieure de la partie cylindrique et le siège de soupape de la partie corps et une extrémité supérieure de la partie orifice d'entrée.

7. Soupape de commutation de canal selon la revendication 6, ladite extrémité supérieure de la partie orifice d'entrée servant de butée pour empêcher l'élément valve de descendre depuis une face inférieure du siège de soupape d'une distance prédéfinie ou plus.
